# EUROPEAN PATENT APPLICATION

(11) **EP 4 596 379 A1**
(43) Date of publication of application: **06.08.2025**
(21) Application number: 25153711.4
(22) Date of filing: 24.01.2025
(51) Int. Cl.: B62J 1/00, B62J 17/10

(54) **MOTORCYCLE**

(30) Priority: 30.01.2024 IT 202400001791
(71) Applicant: Piaggio & Co. S.p.A., 56025 Pontedera (PI) (IT)
(72) Inventor: DE LUCA, MARCO, 56025 PONTEDERA (PISA) (IT); CARLAPPI, ANDREA, 56025 PONTEDERA (PISA) (IT)
(74) Representative: Pipoli, Massimo

(57) **Abstract**

A motorcycle (1) comprising a tail cover assembly (2) having an upper surface (3), a lower surface (4) and side skirts (5) protruding downward from the lower surface (4) of said tail cover assembly (2);
wherein the side skirts (5) and said lower surface (4) define an air channel (6) opened at the bottom.

## Description

### TECHNOLOGICAL FIELD

The present invention relates to the field of rideable saddle vehicles. In particular, it relates to the field of motorcycles with two in-line wheels.

### BACKGROUND ART

The prior art comprises various known solutions for optimizing the aerodynamics of a motorcycle. Some documents are directed to the optimization of aerodynamics of the motorcycle tail cover, such as the solution described in WO2023228143A1, for example. In particular, this solution relates to a solution which, in addition to optimizing aerodynamics of the motorcycle tail cover, provides a spoiler capable of generating downforce when the motorcycle is traveling at high speeds. This solution optimizes the aerodynamics of the upper part of the tail cover.

Another known solution is described in document WO2022162572A1. This document describes a motorcycle provided with a swingarm and a fairing configured to optimize the passage of air from the bottom of the vehicle through the space defined between the inner surface of the swingarm and the rear wheel.

The known solutions do not optimize the aerodynamics and downforce in the zone lying between the rear wheel and the bottom of the tail cover. Turbulence can form in this zone due to the air coming from the bottom of the vehicle and the flanks of the vehicle. Therefore, it is important to optimize the outflow of the airflow coming from the bottom of the motorcycle and flowing tangentially over the front and upper part of the rear wheel, so as to make the extraction of such a flow from this zone more effective.

### SUMMARY

The aforesaid drawbacks of the prior art have now been solved by a motorcycle comprising a tail cover assembly having an upper surface, a lower surface and side skirts protruding downward from the lower surface of said tail cover assembly. The side skirts and the lower surface define an air channel open at the bottom. The side skirts together with the bottom of the tail cover, or lower surface of the tail cover, define a channel open at the bottom, which is capable of channeling the air flowing in the zone between the rear wheel and the tail cover, when the motorcycle is traveling at high speeds.

In particular, the upper surface of the tail cover assembly can diverge upward and/or laterally at a rear end of the tail cover assembly to form a spoiler. This small spoiler helps the extraction of the airflow inside the air channel.

The rear end of the tail cover assembly can be formed by a rear end of the lower surface and rear ends of the side skirts. The rear ends of the skirts are coplanar with the rear end of the tail cover bottom to optimize the detachment of the flow lines from the rear end of the tail cover assembly.

The lower surface of the tail cover assembly can be concave with a concavity facing downward. This shape makes allows facilitating the airflow from the bottom of the motorcycle. Indeed, the concave and curved shape allows making easier for the air to escape from the rear end of the motorcycle.

The lower surface of the tail cover assembly can comprise a hump having a convexity facing downward. This hump allows accelerating the airflow from the bottom, also referred to as the underbelly, of the motorcycle. By increasing the airflow speed at the hump, a downforce which contribute to stabilizing the rear end of the motorcycle is generated.

In particular, the hump can lie above a rear wheel at a rear wheel axis when the motorcycle is viewed from a side. The rear wheel is the ideal lower side of the air channel which is formed between the side skirts and the bottom of the tail cover. Therefore, when the hump oriented towards the ground lies at the height of the apex of the rear wheel, a narrowing of the air channel is created, which generates the aforesaid acceleration of the airflow which provides downforce to the rear end.

The lower edges of the side skirts can lie below the lower surface of the tail cover assembly. Since the edges of the side skirts are lower than the lower surface of the tail cover assembly, the airflow stays within the side skirts without escaping laterally.

The upper surface can comprise two wings protruding upward and laterally from said upper surface. This shape of the upper wings allows optimizing the airflow which flows over the rider's back and then meets the upper side of the motorcycle tail cover.

The side skirts can extend from a zone lying under a seat up to a rear end of the tail cover assembly. The airflow from the bottom of the motorcycle and rising into the zone between the rear wheel and the rear fairing is thus best captured.

One rear end of the tail cover assembly can be U-shaped when the motorcycle is viewed from behind. This shape of the tail cover assembly allows retaining the airflow flowing over the rear wheel within the side skirts.

These and other advantages will become more apparent from the following description of an embodiment thereof, given by way of non-limiting indication, with reference to the accompanying drawings.

### DESCRIPTION OF THE DRAWINGS

In the drawings:
Fig. 1 shows a diagrammatic side view of the motorcycle of the present invention;
Fig. 2 shows a diagrammatic axonometric rear view of the tail cover assembly of the motorcycle of the present invention;
Fig. 3 shows an axonometric front view of the motorcycle of the present invention;
Fig. 4 shows a rear view of the motorcycle of the present invention;
Fig. 5 shows a side view of the motorcycle of the present invention;
Fig. 6 shows an axonometric rear view of the motorcycle of the present invention.

### DETAILED DESCRIPTION

The following description of one or more embodiments of the invention relates to the accompanying drawings. The same reference numerals in the drawings identify equal or similar elements. The subject of the invention is defined by the appended claims. The technical details, structures, or features of the solutions described below can be mutually combined in any manner.

In the text, the terms "tail cover" or "tail cover assembly" are used synonymously. Similarly, the terms "lower surface" and "bottom" of the tail cover are used synonymously to indicate the side of the tail cover which faces the ground.

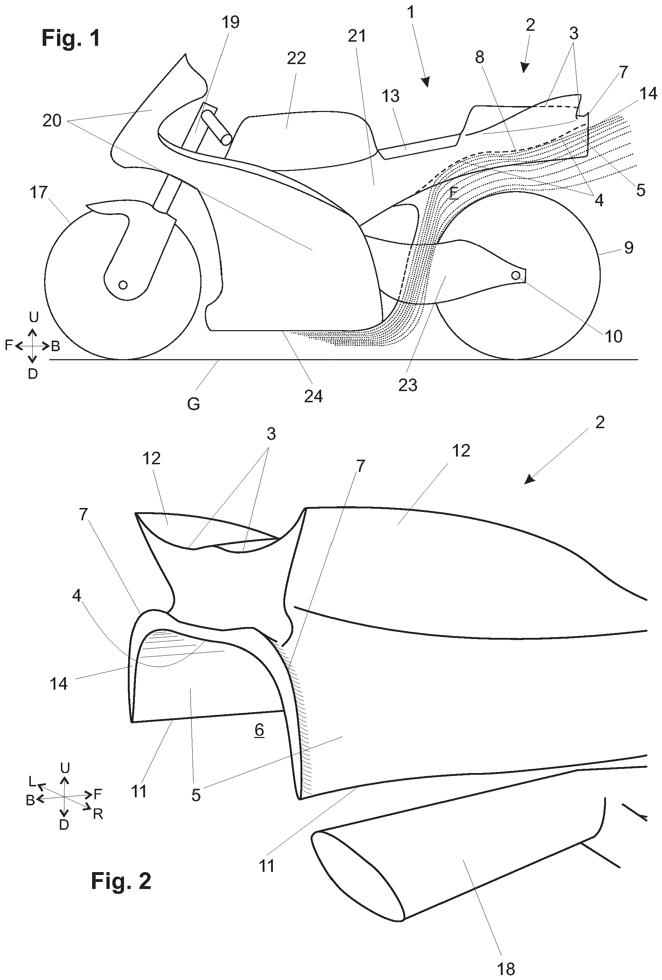

A motorcycle 1 comprising a front wheel 17 and a rear wheel 9 is shown with reference to Figs. 1-6. The rear wheel 9 is a drive wheel, while the front wheel 17 is a steering wheel controlled by a steering column 19. The steering column 19 is rotatably connected to a frame covered at the front by a front fairing 20 and at the rear by a rear fairing 21. The rear wheel 9 is connected to the frame by means of a swingarm 23. The rear fairing 21 supports a saddle 13 and comprises a tail cover assembly 2. The tail cover assembly 2 is the rearmost portion of the rear fairing 21 and together with the rear wheel 9 forms the rear end of the motorcycle 1. The motorcycle 1 further comprises an engine which, in the case depicted in the figures, is of the heat type and thus comprises an exhaust pipe 18.

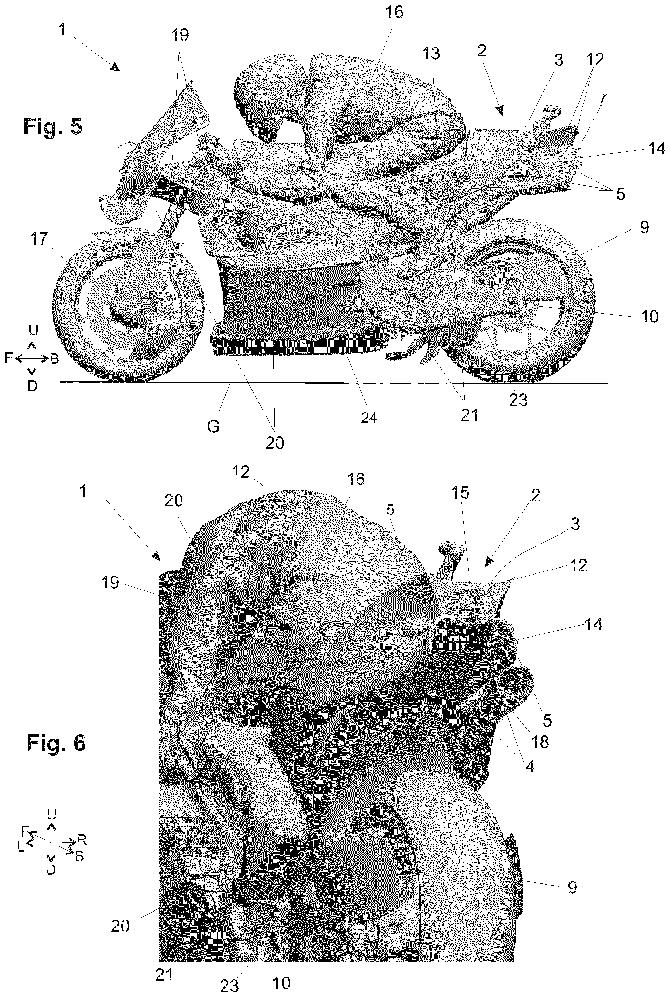

In particular, Fig. 1 shows a motorcycle 1 in which the tail cover 2 can be seen with hidden elements drawn with a dashed line. In particular, the dashed line indicates the lower surface 4, i.e., the bottom, of the tail cover 2. The bottom 4 of the tail cover 2 is normally concealed from the side view by the side skirts 5, as is the case shown in Fig. 5. Conversely, the lower surface 4 can be seen in Figs. 2, 4 and 6, because the motorcycle 1 is partially observed from behind.

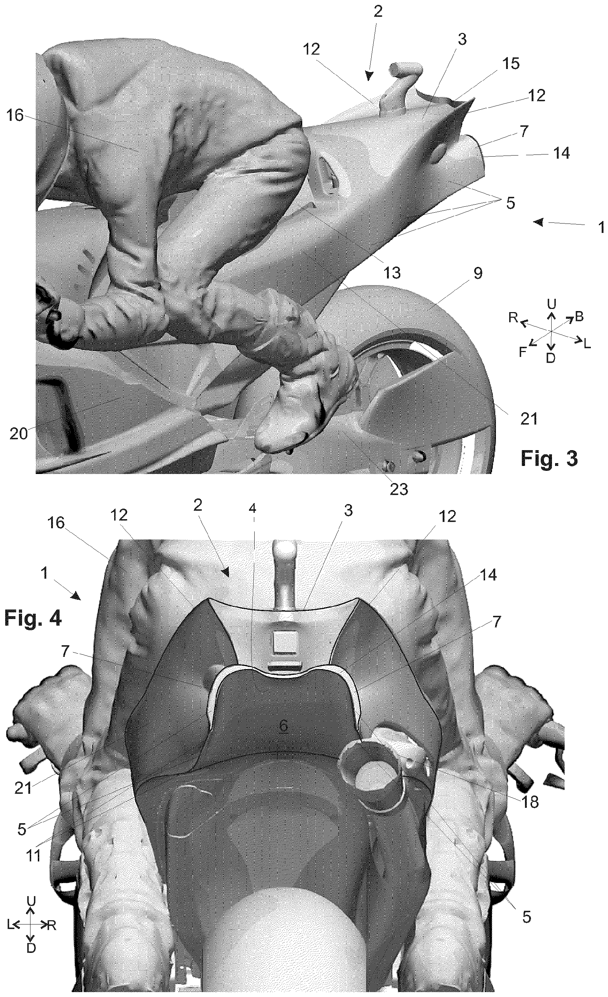

The tail cover 2 has an upper surface 3 which slopes downward in a rear direction, as shown in Fig. 3. The upper surface 3 also slopes downward in the right-left direction, as shown in Fig. 3.

Two wings 12, optional, branch upward from the upper surface 3. The wings 12, in addition to extending upward, extend laterally, i.e., the right wing extends rightward and the left wing extends leftward, as better shown in Figs. 4 and 6. The wings 12 are fin-shaped and extend from a zone close to the saddle 13 up to end at the rear close to the rear end 14 of the tail cover 2.

The wings 12 are spaced transversely apart from each other and are connected by the upper surface 3. The upper surface 3 rises upward, close to the rear end 14, to form an upper spoiler 15, better shown in Fig. 3. The upper spoiler 15 runs transversely from one wing 12 to the other.

At the bottom, the tail cover 2 comprises a lower surface 4 which closes the tail cover 2 from underneath. Therefore, a space is created between the upper surface 3 and the lower surface 4, in which some devices of the motorcycle 1 can be housed.

The lower surface 4, better shown in Fig. 1, is a curvilinear surface that is concave in the right-left direction, with the concavity facing downward.

In the front-rear direction, the lower surface 4 is concave with a concavity facing downward, as better shown in Fig. 1. The longitudinal concavity of the lower surface 4 is partially attenuated by a hump 8 having a convexity facing downward. Because of this hump 8, the lower surface 4 is concave overall, but has a convex zone at the height of the top of the rear wheel 9. In a side view, as shown in Fig. 1, the hump 8 lies approximately at the wheel axis 10 of the rear wheel 9.

Two side skirts 5 extend downward from the lower surface 4. The lower surface 4, which, as mentioned, is concave in the right-left direction, is tangent with the side skirts 5. The surface resulting from the joining of the lower surface 4 and the surfaces of the side skirts 5 which face each other, is a continuous, overall concave surface with downward concavity. In particular, close to the rear end 14 of the tail cover 2, this concavity is more pronounced and takes the shape of an inverted U, as shown in Figs. 2, 4 and 6.

The side skirts 5, lying to the right and left of the lower surface 4, respectively, extend in a front-rear direction from a zone lying under the saddle 13 up to end at the rear at the rear end 14 of the tail cover 2.

The side skirts 5 define the flanks of an air channel 6 which extends under the tail cover 2. The air channel 6 is closed at the top by the lower surface 4 that, being concave, directs the airflow F from the bottom 24 of the motorcycle 1 backward over the rear wheel 9.

The side skirts 5 are lower than the lower surface 4, i.e., the lower edges 11 of the side skirts 5 lie below the lower surface 4, so as to define the air channel 6 along the whole extension of the side skirts 5.

As shown in Fig. 1, the lines of airflow F from the bottom 24 of the vehicle rise upward in front of the rear wheel 9 until they reach the lower surface 4. Thus, the lower surface 4 of the tail cover 2 guides the flow F toward the rear of the motorcycle 1 without turbulence.

The air channel 6 closed at the bottom by the rear wheel 9 varies the height thereof (distance from the rear wheel 9 to the lower surface 4) as a function of the swinging of the swingarm 23. Laterally, the air channel 6 thus defined is partly closed by the side skirts 5 and partly open. If the side skirts 5 extend vertically until they reach or approach the rear wheel 9 (solution not shown), the air channel 6 is almost completely closed and the lines of the airflow F are almost completely channeled from the tail cover 2 towards the rear of the motorcycle 1.

Since the lower surface 4 comprises a hump 8 close to the upper apex of the rear wheel 9, the section of the air channel 6 decreases and the airflow F accelerates, as diagrammatically shown in Fig. 1. By increasing the speed of the airflow F, a downward thrust of the tail cover 2, i.e., downforce of the tail cover 2, is generated, which tends to load the rear end, making the motorcycle 1 more stable at high speeds.

The rear trailing edge of the side skirts 5 and the lower surface 4 are preferably coplanar, as better shown in Fig. 2.

In order to facilitate the air extraction from the air channel 6, the trailing edge of the side skirts 5 is flared in the front-rear direction, so that the flaring extends both upward and laterally. The spoiler 7 thus created facilitates the extraction of air from the air channel 6.

In conclusion, it is apparent that the invention thus devised is susceptible to several modifications or variations, all falling within the invention; moreover, all details are replaceable by technically equivalent elements. In practice, the amounts may be varied according to technical needs.

### Key:

- 1: motorcycle
- 2: tail cover assembly
- 3: upper surface (of the tail cover assembly)
- 4: lower surface (of the tail cover assembly)
- 5: side skirt
- 6: air channel
- 7: spoiler
- 8: hump (of the lower surface of the tail cover assembly)
- 9: rear wheel
- 10: axis (of the rear wheel)
- 11: lower edge (of the side skirt)
- 12: wing
- 13: saddle
- 14: rear end (of the tail cover assembly)
- 15: upper spoiler
- 16: rider
- 17: front wheel
- 18: exhaust pipe
- 19: steering column
- 20: front fairing
- 21: rear fairing
- 22: tank
- 23: swingarm
- 24: bottom (of the motorcycle)
- G: ground
- F: airflow

## Claims

1. A motorcycle (1) comprising a tail cover assembly (2) having an upper surface (3), a lower surface (4) and side skirts (5) protruding downward from the lower surface (4) of said tail cover assembly (2);
wherein the side skirts (5) and said lower surface (4) define an air channel (6) open at the bottom; wherein the lower surface (4) of the tail cover assembly (2) comprises a hump (8) having a convexity facing downward.

2. Motorcycle (1) according to claim 1, wherein the upper surface (3) of the tail cover assembly (2) diverges upward and/or laterally at a rear end (14) of the tail cover assembly (2) to form a spoiler (7).

3. Motorcycle (1) according to claim 2, wherein the rear end (14) of the tail cover assembly (2) is formed by a rear end of the lower surface (4) and rear ends of the side skirts (5).

4. Motorcycle (1) according to any one of the preceding claims, wherein the lower surface (4) of the tail cover assembly (2) is concave with a concavity facing downward.

5. Motorcycle (1) according to any one of the preceding claims, wherein the hump (8) lies above a rear wheel (9) at a rear wheel axis (10) when the motorcycle (1) is viewed from a side.

6. Motorcycle (1) according to any one of the preceding claims, wherein lower edges (11) of the side skirts (5) lie below the lower surface (4) of the tail cover assembly (2).

7. Motorcycle (1) according to any one of the preceding claims, wherein the upper surface (3) comprises two wings (12) protruding upward and laterally from said upper surface (3).

8. Motorcycle (1) according to any one of the preceding claims, wherein the side skirts (5) extend from a zone lying under a saddle (13) up to a rear end (14) of the tail cover assembly (2).

9. Motorcycle (1) according to any one of the preceding claims, wherein a rear end (14) of tail cover assembly (2) is U-shaped when the motorcycle (1) is viewed from behind.
